# EUROPEAN PATENT APPLICATION

(11) **EP 3 701 908 A1**
(43) Date of publication of application: **02.09.2020**
(21) Application number: 19160023.8
(22) Date of filing: 28.02.2019
(51) Int. Cl.: A61C 9/00

(54) **3D INTRAORAL SCANNER**

(71) Applicant: Sirona Dental Systems GmbH, 64625 Bensheim (DE); DENTSPLY SIRONA Inc., York, PA 17401 (US)
(72) Inventor: Kim, Hong-Keun, 60323 Frankfurt (DE); Popilka, Björn, 69502 Hemsbach (DE); Bobach, Tom, 64625 Bensheim (DE); Vehoff, Stefan, 64625 Bensheim (DE)
(74) Representative: Sommer, Peter

(57) **Abstract**

The invention relates to a 3D intraoral scanner which, with a single sensor (10) or a number of sensors that are rigidly connected to one another and a de-flection system (20), in particular as a mirror system or a prism system, simultaneously records spaced apart partial measurement volumes (MV1, MV2) as measurement data, and performs a correction using the measurement data of a previously calibrated overall measurement volume (MV) consisting of said individual partial measurement volumes (MV1, MV2).

## Description

The invention relates to a 3D intraoral scanner and in particular a 3D intraoral scanner, with which a precise calibration is possible.

For some dental indications, it is necessary to obtain a highly accurate intraoral digital impression of teeth in the jaw. Examples of this are orthodontic treatments, such as splints, more extensive implant treatments, such as the All-on-4 procedure, for example, and monitoring a patient's overall dental situation over a longer period of time.

Conventionally, an impression can be taken using an impression tray and impression compound and then digitized, for example by filling the impression tray with plaster and scanning it with a laboratory scanner.

Currently available intraoral scanners can already produce digital impressions of the entire jaw, the accuracy and reproducibility of which can, however, be improved significantly. Intraoral scanners have an image field that is smaller than an entire jaw, thus making it necessary to combine (register) multiple scans. This results in registration errors, however, that accumulate when multiple individual scans are combined. In addition, due to non-deterministic computer calculation, there exists a reproducibility inaccuracy.

DE102014205784A1 describes a relatively large intraoral camera, which has the size of the entire jaw and, in one variant, is equipped with 3D sensors across the entire surface. This camera is meant to digitize a large number of individual sections of the entire jaw simultaneously and merge them into one overall image. One disadvantage of this is in particular the cost of the large number of sensors. In addition, the simultaneousness of the individual image recordings can get complicated. The overall system is very complex and the size of the housing has to be adjustable to respective jaw sizes. Due to the fixed sensor arrangement, the system lacks the flexibility to scan poorly accessible areas.

DE102014205784A1 further also describes a relatively large intraoral camera, which has the size of the entire jaw and in which a movable mirror system can traverse the entire surface in a defined manner. This camera is meant to digitize a large number of individual sections of the entire jaw sequentially and merge them into one overall image. The disadvantages are that an exact positioning system for the traverse system is difficult to realize and vulnerable; that the relative position of the camera to the jaw has to be fixed; the complexity of the overall system; that the size of the housing has to be adjustable to the jaw sizes; and, due to the fixed sensor arrangement, a lack of flexibility for scanning poorly accessible areas.

US9453722B2 describes the recording of an entire jaw by means of a large number of 3D individual images using a first sensor (an intraoral camera) and the subsequent registration to one overall image. The faulty registration of the originally recorded individual images is corrected using further recordings of two further sensors, which have a fixedly defined orientation relative to one another. In order to achieve a high degree of accuracy, a high degree of simultaneousness of the additional recordings is necessary. Two sensors have to be synchronized with respect to time, however, or the apparatus has to alternatively be firmly connected to the jaw for the additional recordings. The disadvantage is the high cost of two additional sensors and the optical systems. Furthermore, the arrangement of the additional sensors, for example for the distal molars, is inflexible and possibly also too large for the oral cavity.

According to WO201684065A1, different views of an object are measured simultaneously by means of a mirror system. This is not a sufficient enlargement of a measurement volume that allows the simultaneous measurement of spaced apart subregions.

Using the example of a probe intended to measure an ear canal, US20120092461A1 describes a mirror system, the surfaces of which are arranged at an angle of approximately 90° in order to simultaneously measure opposite surfaces for a higher degree of accuracy and also enable a faster measurement with a 180° rotation of the scanner.

US5424836A describes an overall system for simultaneously recording the upper and the lower jaw with a fixed frame. The overall system has considerable disadvantages, which do not permit a high-precision recording of the entire jaw. Due to the linear movement of the system, only straight segments can be measured, which do not exist in a mandibular arch. For the accuracy of the measuring method, the system has to either be firmly connected to the jaw or the position of the device in relation to the object to be measured has to be available at all times, which is unrealistic for a needed level of accuracy and is not comfortable. High-precision images of the entire jaw cannot be produced by means of the measurements using the device. With respect to the optical element, Fig. 7 shows a design in which the measurement volume was doubled for the purpose of simultaneously recording the upper and the lower jaw. The flat mirrors 12, 13, 12" and 13" are arranged mirror-symmetrically to a central surface that runs through the holder 4. The simultaneous measurement of an anterior tooth and a molar is either not possible or unpleasant for the patient, because the direction of movement of the device may possibly go through the cheek. The whole system is limited to two regions to be measured.

According to US20030072011A1, different views of an object are measured simultaneously by means of a mirror system. This is not a doubling, i.e. expansion, of the measuring range that allows the simultaneous measurement of spaced apart subregions.

US4611288A demonstrates the recording of different views of a tooth, US5976076A shows a device for generating a stereoscopic optical image and WO2015188286A1 demonstrates the three-dimensional measurement of an oral cavity by means of movably interconnected measuring bodies.

In the state of the art, there are thus publications that deal with the (preferably) simultaneous measurement of different subregions of a poorly accessible cavity in the human body (intraoral, in the ear) by means of a plurality of sensors, optical systems or mirror systems, but do not explicitly relate to an improved accuracy (trueness) and reproducibility (precision) of the intraoral digital impressions for an entire mandibular arch and therefore do not fulfill the requirements necessary to meet the parameters mentioned at the outset.

Proceeding from the state of the art according to DE102014205784A1, the underlying object of the invention is therefore to provide a 3D intraoral scanner, with which a precise calibration and thus an improved digital impression of an entire mandibular arch is possible.

This object is achieved by a 3D intraoral scanner and a method, as specified in Claim 1 and in Claim 10. Advantageous further developments of the invention are specified in the dependent claims.

According to the invention, a 3D intraoral scanner is provided which, with a single sensor or a number of sensors that are rigidly connected to one another and a deflection system, in particular as a mirror system or a prism system, simultaneously records spaced apart partial measurement volumes as measurement data, and performs a correction using the measurement data of a previously calibrated overall measurement volume consisting of said individual partial measurement volumes.

The degree of simultaneousness in this context is defined by the change in the relative orientation between the intraoral scanner and the object to be measured (e.g. the jaw) during the recording of the two partial measurement volumes. As stated above, when using the current intraoral scanners a large number of individual scans are stitched together, which results in so-called registration errors that propagate and increase over longer distances (plurality of individual scans). According to the present invention, a correction of the relative positions and orientations of the 3D data generated from the individual scans can advantageously be carried out, which means that two separate and spaced apart scanning regions can be brought into a truthful relationship with respect to their relative position and orientation to one another. The information can then be used for the 3D data calculation of the entire jaw as support points or a boundary condition to minimize the error propagation of the registration.

Such a correction can advantageously be carried out in a variety of ways. According to the invention, in particular the regions of an object to be measured, such as the teeth of a jaw, are simultaneously measured by a 3D intraoral scanner, the overall measurement volume of which is spatially calibrated. According to the invention, said overall measurement volume is divided into two segments.

The 3D intraoral scanner in particular includes a light source for emitting a light beam to the deflection system, which is spaced apart from the light source by a first distance. The deflection system directs the light beam received from the light source to the overall measurement volume, which is spaced apart from the deflection system by second distances. The 3D intraoral scanner in particular also includes a sensor, which receives the light beam reflected by the overall measurement volume and again redirected by the deflection system as measurement data. The deflection system comprises surfaces that, for a mirror system configured as a deflection system are mirrored surfaces that are positioned and oriented such that the light beam is directed from the light source by a respective surface of the deflection system to a respective partial measurement volume, which is spaced apart from the respective surface by the second distance.

According to the present invention, 3D measurement data within partial measurement volumes can advantageously be simultaneously deflected onto a sensor of the 3D intraoral scanner by means of a deflection system as a mirror system or a prism system. In order for the partial measurement volumes to meet the requirements of the desired measuring task, both the orientation of the surfaces or mirror surfaces and their position, i.e. the respective distances, have to be suitably selected.

According to the invention, the deflection system in particular comprises two surfaces that are arranged at an angle, in particular at a right angle. The deflection system is advantageously a prism mirror, for example, having two mirrored surfaces that are arranged at a right angle.

According to the invention, the measurement volumes are spatially calibrated to one another. In the present context, spatial calibration describes the process of determining a 6-dimensional coordinate transformation between the partial measurement volumes consisting of three translations and three rotations (rigid body transformation, spatial transformation).

If the coordinate transformation between the partial measurement volumes is known, spaced apart regions of a rigid structure can be measured simultaneously and truthfully by means of said coordinate transformation. The time difference resulting from the different distances of the regions to be measured to the intraoral scanner is negligible.

The calibration is carried out by simultaneously measuring a reference body with known geometry through both partial measurement volumes of the present invention. A rigid body transformation or coordinate transformation between the two partial measurement volumes is determined on the basis of the known geometry of the reference body. In order to increase the robustness of the determined coordinate transformation, an averaged transformation of a number of calibration measurements can be used. If the manufacturing tolerances of the deflection system, i.e. the surfaces, orientations, relative positioning to the sensor system and distances, are sufficiently tight, the coordinate transformation of the two partial measurement volumes can likewise be determined by means of optical calculations and simulations. Said calibration can advantageously be used as support points or a boundary condition for the 3D data calculation of the entire jaw.

According to the invention, the partial measurement volumes are directed to regions of a jaw and in particular to molars. By means of the known coordinate transformation, such as by means of spatial calibration, optical calculations or simulations, truthful 3D points of the measured jaw regions are produced in the partial measurement volumes. Said 3D data, for example of the molars, can be used as support points to correct the registration of a previously or subsequently recorded plurality of individual scans of the entire mandibular arch.

According to the invention, the 3D measurement data obtained from objects in the partial measurement volumes thus serve to correct the registration of already existing individual image recordings of an entire jaw. The accuracy (trueness) and the reproducibility (precision) of intraoral digital impressions can therefore advantageously be improved for an entire mandibular arch.

According to the invention, the partial measurement volumes are directed onto regions of a jaw and in particular onto scan bodies, which are used to identify the implant position and implant orientation. A truthful position of the measured scan bodies, and thus of the implants, can be determined using the known coordinate transformation.

According to the invention, the deflection system is designed such that an entire bundle of light beams of objects to be measured in the partial measurement volumes generates data. A precise calibration and consequently a good acquisition of 3D measurement data can thus be achieved. One of many possible arrangements of a single mirror surface of a mirror system configured as a deflection system is described in the following based on the path of a light beam.

According to the invention, a light beam from the light source passes through a point A on the light source, on the sensor or another optical component (such as a lens or a mirror), a point B on the mirrored surface and a point C on the object to be measured, wherein the points ABC define a triangle and an associated plane E_ABC and a respective mirrored surface is approximately orthogonal to the plane E_ABC, and the two legs AB and BC of the triangle ABC have the same angle to the mirrored surface.

In a simple manner, therefore, this path of the light beam advantageously determines the distances and the positioning of the light source, the object, the mirrored surfaces and the sensor or the associated optics with respect to one another. The two mirrors can therefore have different positions and orientations within the scanner system, as long as different spaced apart regions of the mandibular arch are projected onto the sensor by the respective mirror surfaces.

The following detailed description and the attached drawings, which illustrate the features of the present invention using an example, will clarify the stated and further features and details of the invention to a person skilled in the art in the field, wherein
Figure 1 shows an illustration of the principle of an optical measurement method using a conventional intraoral scanner,
Figure 2 shows an illustration of the principle of an optical measurement method using a 3D intraoral scanner according to the present invention,
Figure 3 shows a known 3D intraoral scanner with an extended measurement volume,
Figure 4 shows an illustration of a jaw with respective individual scans,
Figure 5 shows an illustration of a deflection system as a mirror arrangement according to the present invention, and
Figure 6 shows an illustration of a further variant of a deflection system as a mirror arrangement according to the present invention, wherein a deflection mirror of a mirror sleeve plus a 90 degree mirror can be seen.

The present invention is explained in detail in the following using preferred embodiments and with reference to the figures.

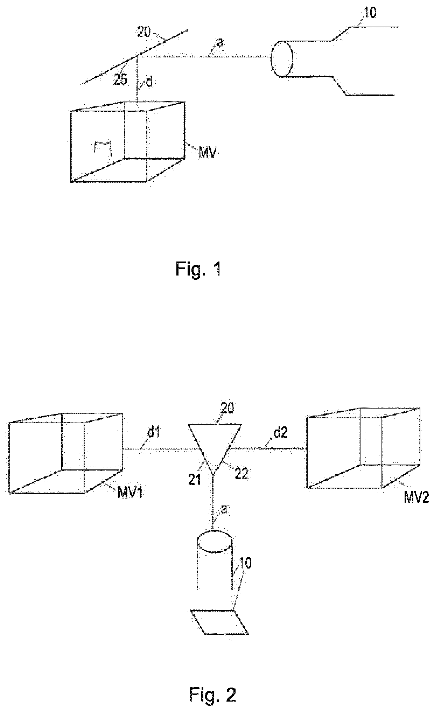

Figure 1 shows an illustration of the principle of an optical measurement method using a conventional intraoral scanner having a sensor 10 and a mirror system configured as a deflection system 20 with a mirrored surface 25. A first distance a from the sensor 10 to the mirrored surface 25, and a second distance d from the mirrored surface 25 of the mirror system 20 to an overall measurement volume MV are shown. A tooth is shown within an overall measurement volume MV as an object to be measured. For the conventional intraoral scanner, the overall measurement volume MV is limited (MV_normal = 15x15x15 mm3) and the distance between the one deflecting mirrored surface area 25 and the measured tooth has to remain small as well (d_normal = 0-10 mm).

Figure 2 shows an illustration of the principle of an intraoral scanner according to the present invention. In comparison to Figure 1, a sensor 10 and a mirror system configured as a deflection system 20 with two mirrored surfaces 21 and 22 are shown. A first distance a from the sensor 10 to the mirrored surfaces 21, 22, and second distances d1 and d2 from the mirrored surfaces 21 and 22 of the mirror system 20 to two partial measurement volumes MV1 and MV2 are respectively shown. Molars are respectively provided in the partial measurement volumes MV1 and MV2 as objects to be measured; this is not explicitly shown. In accordance with the specifications given for the principle shown in Figure 1, it is essential here that the distance a of the mirror system 20 from the sensor 10 is dimensioned such that the focal planes of the partial measurement volumes MV1 and MV2 are arranged at the distance of the separate objects to be measured (the two terminal molar teeth, namely approximately 4-5 cm). The distance between the partial measurement volumes MV1 and MV2 therefore has to be at least 2.5 times the measurement volume expansion of approximately 15 mm. The exact values depend on the scanner technology and also on the geometry of the jaw.

With regard to Figure 2, it can be seen that a simultaneous measurement of the objects in the partial measurement volumes MV1 and MV2 takes place, so that the entire overall measurement volume MV consisting of the partial measurement volumes MV1 and MV2 is spatially calibrated, which corresponds to a measurement volume calibration. This overall measurement volume MV can generally be contiguous or subdivided into any number of segments. In the example of Figure 2, the overall measurement volume MV is divided into the two segments MV1 and MV2. The partial measurement volumes MV1 and MV2 can be covered by different or, preferably, the same measurement technologies. In particular the provision of two mirrored surfaces 21 and 22 makes the use of the same measurement technology possible, whereby a measurement also takes place simultaneously.

With respect to the measurement technologies, it would also be conceivable, for example, to achieve the same type of "spatial calibration" not by means of a sensor and a 90° mirror, but rather by providing an Omnicam(OC) head on the one side (stripe triangulation), for example, and providing miniature cameras on the rear side of the mirror sleeve 2 as a stereo system.

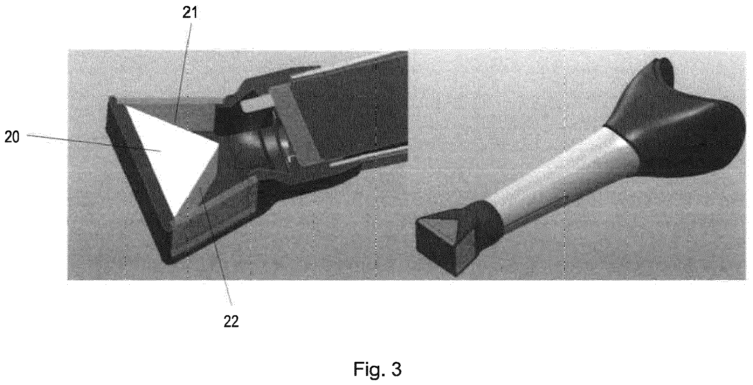

Figure 3 shows an exemplary realization of a 3D intraoral scanner using a design of a conventional intraoral scanner, such as the scanner CEREC OMNICAM (OC) of the company Sirona. It can clearly be seen that the deflection system 20 is configured as a prism mirror with two mirrored surfaces 21 and 22 that are arranged perpendicular to one another.

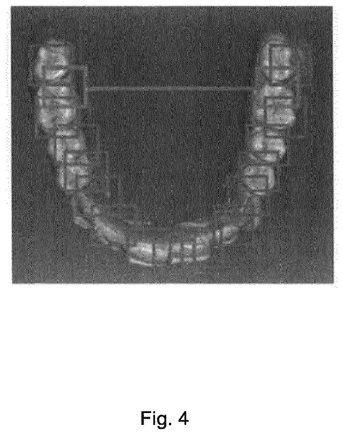

Figure 4 shows an illustration of a jaw with respective individual scans. Individual scans over all the objects (teeth) of the jaw are shown using drawn squares. Two individual scans are highlighted by individual scans on the molars of the jaw, which are connected to one another by a line. These two individual scans show the objects simultaneously measured by the 3D intraoral scanner in accordance with the invention as calibration or support points for the rest of the individual scans.

The degree of simultaneousness in this context is defined by the change in the relative orientation between the intraoral scanner and the object to be measured (e.g. the jaw) during the recording of the two partial measurement volumes.

As stated at the outset, when using the current intraoral scanners a large number of individual scans are stitched together, which results in so-called registration errors that propagate and increase over longer distances. According to the present invention, a correction is carried out, which means that two separate and spaced apart areas, which are shown to be connected to one another, are to be brought into a truthful relationship in terms of their relative position and orientation to one another. The information obtained in this manner can then be used for the 3D data calculation of the entire jaw as support points or a boundary condition to minimize the error propagation of the registration.

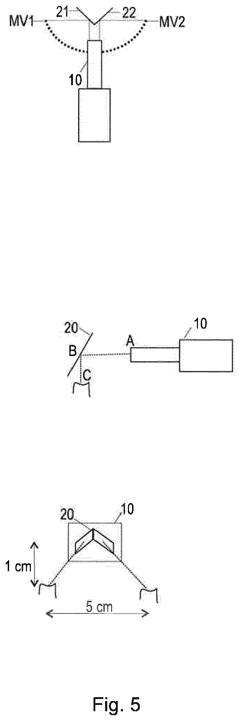

Figure 5 shows an illustration of an exemplary deflection system as a mirror arrangement according to the present invention.

For easier and better handling of the system, especially in the lower jaw situation, the mirror surfaces 21 and 22 can be oriented as needed. For the case in which the camera records images of the molar teeth "obliquely from above", the mirror surface arrangement must be as is shown in Figure 5.

The concept for a light beam will be explained using an example. The light beam passes through points A, B, and C (A: on the scanner, B: reflection point on the mirror surface and C: the 3D point to be measured on the tooth). The points ABC define a triangle and an associated plane E_ABC. The respective mirror surface E_Mirror now has to be approximately orthogonal to the plane E_ABC and the two legs AB and BC of the triangle ABC have to have the same angle to the mirror surface (E_Mirror). The orientations to be realized in practice are dependent on the respective scanner technology, the measurement volumes and the jaw geometries. The dimensions entered in the "front view" serve as rough guide values.

The mirror arrangement has to in particular be selected such that the whole bundle of light beams can generate 3D data from the two objects to be measured in the partial measurement volumes MV1 and MV2.

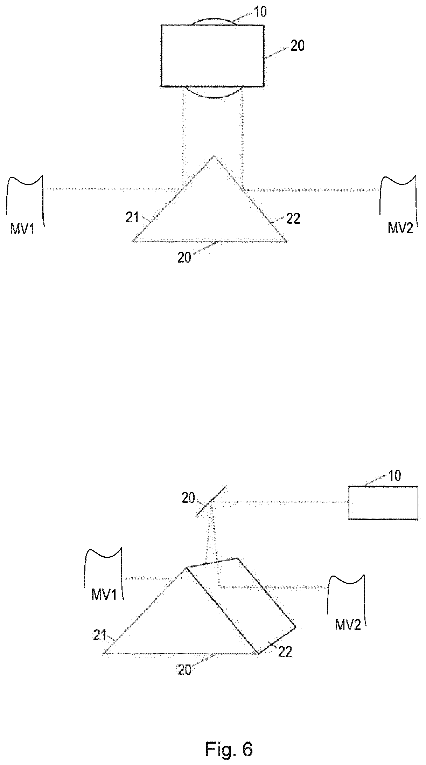

Figure 6 shows yet another variant of an illustration of an exemplary deflection system as a mirror arrangement according to the present invention, wherein a deflection mirror of a mirror sleeve plus a 90 degree mirror can be seen.

According to the invention, a 3D intraoral scanner is provided, which simultaneously records spaced apart measurement volumes with a single sensor and a mirror system and performs a spatial calibration of the measurement volume consisting of the partial measurement volumes. Thus, according to the invention, the accuracy (trueness) and reproducibility (precision) of intraoral digital impressions can be improved for an entire mandibular arch.

With respect to the single sensor, an explicit allocation of measurement volumes is not necessary. Allocation is performed in the course of registration by the software. One part of the sensor receives the data of a first partial measurement volume and another part of the sensor receives the data of a second partial measurement volume. A half sensor surface is preferably provided for each partial measurement volume.

The present invention in particular possesses the following technical advantages. The 3D intraoral scanner of the present invention is intraorally usable and exhibits the highest precision by achieving a highest degree of simultaneousness obtained by using transit time differences of the light and by using the mirrored surface. There is no need to synchronize multiple sensors, as is the case with the devices known from the state of the art. The reproducibility is excellent. Since the required space is small and it does not have to be attached to the jaw or body of the patient, the 3D intraoral scanner of the present invention additionally also offers a certain amount of comfort for the patient. Direct contact with the jaw of a patient is not necessary. It can be used at short notice so that there are no long waiting times for patients. Since it has no moving parts, the 3D intraoral scanner of the present invention is distinguished by extreme robustness. Since it is not dependent on scanning strategies and is easy to handle, its usability is multifaceted. It should also be emphasized that it is cost-effective, as only one sensor is needed. Lastly, it can be configured as an affordable additional accessory device for devices already on the market.

The novel arrangement of multiple mirror surfaces according to the invention includes an enlargement of the measurement volume of a conventional intraoral dental scanner to the at least 2.5-fold expansion. To create this expanded measurement volume with conventional intraoral dental scanners, both a suitable orientation of the mirror surfaces and a suitable positioning of the mirror surfaces are essential.

The highest degree of simultaneousness (coincidence) between the 3D data of the two measurement volumes is achieved by the combination of a mirror and the use of a single 3D sensor. The 3D data can be used to correct already existing individual image recordings of an entire jaw.

Creating precise and reliable intraoral impressions of the entire jaw is a controversially discussed topic in professional circles. With the 3D intraoral scanner described here, a major challenge of creating digital impressions of the entire jaw impressions (accuracy, reproducibility, ease-of-use) can be solved in an affordable, robust and simple manner. Said scanner can also be realistically implemented as an add-on for systems already available on the market.

## Claims

1. 3D intraoral scanner, which, with a single sensor (10) or a number of sensors that are rigidly connected to one another and a deflection system (20), in particular as a mirror system or a prism system, simultanously records spaced apart partial measurement volumes (MV1, MV2) as measurement data, and performs a correction using the measurement data of a previously calibrated overall measurement volume (MV) consisting of said individual partial measurement volumes (MV1, MV2).

2. 3D intraoral scanner according to Claim 1 comprising a light source for emitting a light beam to the deflection system (20), which is spaced apart from the light source by a first distance (a), wherein the deflection system (20) directs the light beam received from the light source to the overall measuring volume (MV), which is spaced apart from the deflection system (20) by second distances (d; d1, d2), and a sensor (10), which receives the light beam reflected by the overall measurement volume (MV) and again redirected by the deflection system (20) as measurement data, wherein the deflection system (20) comprises surfaces (21, 22) that are positioned and oriented such that the light beam is directed from the light source by a respective surface (21, 22) of the deflection system (20) to a respective partial measurement volume (MV1, MV2), which is spaced apart from the respective mirrored surface (21, 22) by the second distance (d; d1, d2).

3. 3D intraoral scanner according to Claim 2, **characterized in that** the deflection system (20) comprises two surfaces (21, 22) which are arranged at an angle, in particular a right angle.

4. 3D intraoral scanner according to any one of the preceding Claims, **characterized in that** the partial measurement volumes (MV1, MV2) are spatially calibrated to one another.

5. 3D intraoral scanner according to any one of the preceding Claims, **characterized in that** 6-dimensional coordinate transformations between the partial measurement volumes (MV1, MV2) are determined using a spatial calibration or are known from optical calculations or design drawings.

6. 3D intraoral scanner according to any one of the preceding Claims, **characterized in that** the partial measurement volumes (MV1, MV2) are areas of a jaw and are in particular molars and in particular contain scan bodies.

7. 3D intraoral scanner according to any one of the preceding Claims, **characterized in that** the measurement data obtained from objects in the partial measurement volumes (MV1, MV2) are used to correct the 3D measurement data calculated from already existing or subsequently generated individual image recordings of an entire jaw.

8. 3D intraoral scanner according to any one of Claims 2 to 7, **characterized in that** the deflection system (20) is designed such that a whole bundle of light beams of the objects to be measured in the partial measurement volumes (MV1, MV2) generate data.

9. 3D intraoral scanner according to Claim 8, **characterized in that** a light beam from the light source passes through a point A on the light source, on the sensor (10) or another optical component, such as a lens or a mirror, a point B on the surface, such as a mirrored surface, for example, and a point C on the object to be measured, wherein the points ABC define a triangle and an associated plane E_ABC and a respective, for example mirrored, surface is approximately orthogonal to the plane E_ABC, and the two legs AB and BC of the triangle ABC have the same angle to the, for example, mirrored surface.

10. Method for recording intraoral jaws using a 3D intraoral scanner comprising a light source, a sensor (10) and a deflection system (20), in particular as a mirror system or prism system, **characterized in that** at least two spaced apart partial measurement volumes (MV1, MV2) are illuminated by means of the deflection system (20) and the light beam reflected by the partial measurement volumes (MV1, MV2) is directed onto the sensor (10) by the deflection system (20) and simultaneously recorded, and that a spatial calibration is performed using the overall measurement volume (MV) consisting of the partial measurement volumes (MV1, MV2), and that a correction of the overall measurement volume (MV) is performed using the thus obtained calibration data.

11. Method according to Claim 10, **characterized in that** a truthful transformation between the two partial measurement volumes (MV1, MV2) is determined for the purpose of a calibration, whereby said transformation forms the basis for a correction.

12. Method according to Claim 10, **characterized in that**, for the correction, two separate and spaced apart regions are brought into a truthful relationship in terms of their relative position and orientation to one another and stored as measurement data.

13. Method according to Claim 12, **characterized in that** the measurement data is used to correct 3D measurement data calculated from already existing or subsequently generated individual image recordings of an entire jaw.

14. Method according to any one of Claims 11 to 13, **characterized in that** the partial measurement volumes (MV1, MV2) include two molars.
